# EUROPEAN PATENT APPLICATION

(11) **EP 2 284 820 A1**
(43) Date of publication of application: **16.02.2011**
(21) Application number: 09167144.6
(22) Date of filing: 04.08.2009
(51) Int. Cl.: G09B 19/00, A62C 99/00, G09B 9/00, G09B 23/06, G06F 3/01

(54) **Method for training the use of fire-fighting equipment**

(71) Applicant: Pinyol Fontseca, Josep Maria, 08242 Manresa Barcelona (ES); Fargas Angrill, Antonio, 08271 Artés Barcelona (ES); Codinach, Xavier, 08242 Manresa Barcelona (ES); Vilarasu Soler, Angel, 08242 Manresa Barcelona (ES)
(72) Inventor: Pinyol Fontseca, Josep Maria, 08242 Manresa Barcelona (ES); Fargas Angrill, Antonio, 08271 Artés Barcelona (ES); Codinach, Xavier, 08242 Manresa Barcelona (ES); Vilarasu Soler, Angel, 08242 Manresa Barcelona (ES)
(74) Representative: ZBM Patents

(57) **Abstract**

A method for training the use of fire-fighting equipment, comprising: obtaining input on the movement of a user through a simulated structure from at least one sensor; obtaining input on the use of a simulated fire repressing device from a remote control device; calculating the development of a simulated fire in the simulated structure taking the structure and the input on the use of said simulated fire repressing device into account; generating a video signal reflecting an instantaneous view of a user of a simulated fire in a simulated structure taking the calculated development of the fire and the input on the movement of the user through said structure into account; and sending said generated video signal to a device capable of reproducing said video signal on at least one screen.

## Description

### FIELD OF THE INVENTION

The present invention relates to a method for training the use of fire-fighting equipment, more particularly it relates to a method for training the use of fire-fighting equipment using a simulated repressing device in a simulated fire to extinguish a simulated fire.

### PRIOR ART DESCRIPTION

When a fire starts in e.g. an industrial plant, a department store, a cinema or a school (or any other establishment), it will take at least a few minutes before firemen arrive at the scene. These first minutes are however crucial. To a large extent, the actions taken during the first minutes of a fire actually determine the resulting physical injuries and loss of lives of people present and material damage to the building. The personnel of these establishments present at the time of the fire carries the responsibility of organizing the initial evacuation and/or taking the initial actions to extinguish, if possible, the fire. The role of the personnel in the outcome of the fire is therefore huge. Proper training of personnel is therefore of the utmost importance. However, it is hardly possible to organise a training that is realistic, in the sense that it would be comparable to a real-life situation of a burning cinema or hospital.

It is known to perform training in the use of fire-fighting equipment by setting a real fire in especially reserved sites e.g. to a bail of hay and allow trainees to practice in the use of fire-fighting equipment. However, this way of training suffers from a number of disadvantages: such practice may only be performed during times of the year when the risk of spreading of fire is small, such a training consumes fuel and thus causes pollution. Also, such practice can only be performed in reserved sites, which may be hard to reach, or at the least, the transportation of personnel to such sites can represent a cost to the companies in question.

To overcome part of these problems, it is known from the prior art to use simulations in such fire-fighting trainings. One of these prior art systems is shown in US 6,129,552 which discloses an installation comprising a screen of large size on which varying images are displayed representing a fire in a sequence under the control of a computer. A user can perform an exercise using a modified fire extinguisher device delivering a virtual jet, whose point of impact on the screen can be located, with corresponding information being transmitted to the computer.

US 4,001,949 discloses a method and system for providing on-line fire responses in accordance with the accuracy of an on-line fire fighting sequence employed by a fire fighter, including the steps of dynamically simulating the occurrence of an actual fire, establishing a predetermined fire-fighting sequence to be followed by the fire fighter for properly extinguishing the simulated fire, monitoring the actual on-line fire fighting sequence employed and comparing the actual fire-fighting sequence with the predetermined fire-fighting sequence.

Although these systems solve some of the earlier mentioned problems, fire fighting using this kind of computer system is not realistic enough to optimally prepare personnel for fire fighting in a real situation under real stress.

### SUMMARY OF THE INVENTION

There thus still exists a need for an improved method and system for training the use of fire-fighting equipment. The object of the present invention is to fulfil such a need. Said object is achieved with a method according to claim 1, a computer program product according to claim 11, a computer system according to claim 14, and a system according to claim 18. The other claims define some of the preferred embodiments of the invention.

In a first aspect, the present invention provides a method for training the use of fire-fighting equipment, comprising obtaining input on the movement of a user through a simulated structure from at least one sensor; obtaining input on the use of a simulated fire repressing device from a remote control device; calculating the development of a simulated fire in the simulated structure taking the structure and the input on the use of said simulated fire repressing device into account; generating a video signal reflecting an instantaneous view of a user of a simulated fire in a simulated structure taking the calculated development of the fire and the input on the movement of the user through said structure into account; and sending said generated video signal to a device capable of reproducing said video signal on at least one screen.

Input on the use of fire-fighting equipment may be obtained and using said input, the results of the user's actions on the simulated fire may be calculated. This way, the actual ability of a user to extinguish a fire using the fire-fighting equipment may be evaluated. Additionally, input on a movement of the user is obtained (and therefore also the user's position) and a video signal reflecting the user's view on the simulated fire from his or her instantaneous position is generated to simulate a user's movement through the simulated structure. A user is thus able to move through a simulated structure. The fire simulation is thus rendered much more realistic and versatile than with prior art methods.

It should be noted that the different elements of the method do not necessarily be performed in the mentioned order. They may be freely interchanged. Nor does one element of the method necessarily have to be finished before starting another element of the method. Instead one element of the method may be performed at least partially simultaneously or continuously simultaneously with other elements of the method. For example, in one embodiment of the present invention, the method comprises the following steps:
(a) generating an initial video signal of a simulated fire in a simulated structure,
(b) sending said generated initial video signal to a device capable of reproducing said video signal on at least one screen, (c) obtaining input on the movement of a user through said structure from at least one sensor, (d) obtaining input on the use of a simulated fire repressing device from a remote control device, (e) calculating the development of the simulated fire in the simulated structure taking the structure and the input on the use of said simulated fire repressing device into account, (f) generating an updated video signal reflecting the view of the user of said simulated fire in said simulated structure taking the calculated development of the fire and the input on the movement of the user through said structure into account, (g) sending said updated video signal to a device capable of reproducing said video signal on at least one screen, and repeating steps (c)-(g) until completion of the training. In other embodiments of the invention, e.g. the order of steps (c) and (d) may be interchanged, and/or step (c) may be arranged between step (e) and (f), and/or steps (a) and (b) are not performed. Within the scope of the present invention, many other options are available.

In preferred embodiments of the invention, generating a video signal reflecting an instantaneous view of a user of a simulated fire in a simulated structure taking the calculated development of the fire and the input on the movement of the user through said structure into account also comprises generating an audio signal of the simulated fire in the simulated structure and sending said generated video signal to a device capable of reproducing said video signal on at least one screen also comprises sending said audio signal to a device capable of reproducing said audio signal. In order to submerge a user as much as possible in the virtual reality of the simulated fire, audio signals may be sent and reproduced. In preferred embodiments, these audio signals are obtained from a data repository of predetermined audio signals, such as pre-recorded sounds. These pre-recorded sounds may include, but are not limited to: screaming of people, smouldering of fire, breaking of a wall, explosion etc..

In some embodiments of the invention, obtaining input on the use of a simulated fire repressing device from a remote control device comprises obtaining input concerning the location and/or orientation of said remote control unit with respect to said at least one screen. In some embodiments of the invention, obtaining input on the use of a simulated fire repressing device from a remote control device comprises obtaining input concerning the type of simulated fire repressing device used. It is important for the user to learn how to use the fire repressing device. One important element of such training is maintaining correct distance and orientation of the device with respect to the fire. Preferably, the remote control device is adapted such that its three-dimensional orientation and its three-dimensional position with respect to a screen upon which the fire is simulated may be determined. The determination of the orientation and distance with respect to the screen may be carried out with any known system: mechanically, optical (infrared or visible), acoustically (e.g. ultrasound), (electro)magnetically, etc.. If both the angular orientation and the distance with respect to the screen can be determined, these data can be used to calculate the effect the use the fire repressing device would, in reality, have on the fire. The simulation thus becomes much more realistic: simply pointing the remote control device and activating it will not be enough to extinguish a fire. An important movement that may be simulated is e.g. a swaying movement of a fire extinguisher. Using the distance to the screen and the orientation of the remote control device, the correct performance of said swaying movement may be evaluated. In preferred embodiments, the method allows a user to select or change a simulated fire repressing device (e.g. water, foam or CO2 extinguisher), such that the correct use of a plurality of fire repressing devices may be trained.

In an aspect of the invention, a remote control device may be formed by a modified fire extinguishing device. Using such a modified fire extinguishing device, a user may experience the actual weight of a real-life fire extinguishing device. In some embodiments, a control subunit may be removably attached to such a fire extinguishing device. The control subunit may comprise e.g. sensors that allow determination of its position and orientation and may comprise control of any number of functionalities. When the control subunit is removed from one fire extinguishing device and placed upon another, the sensors and functionalities arranged with the subunit are then automatically transferred to the other fire extinguishing device. In other embodiments, e.g. the sensors may be arranged with the fire extinguishing device, not with the control subunit, or some functionalities are arranged with the control subunit (and thus transferable), whereas other functionalities are arranged with the fire extinguishing device. In yet other embodiments, the modified fire extinguishing device does not comprise a removable control subunit.

In some embodiments of the invention, obtaining input on the movement of a user through a simulated structure from at least one sensor also comprises obtaining input on a user's orientation with respect to said simulated structure from one or more sensors and when generating a video signal reflecting an instantaneous view of a user of a simulated fire in a simulated structure taking the calculated development of the fire and the input on the movement of the user through said structure into account, also said user's orientation is taken into account. By providing a suitable sensor system (which may be optic, mechanical, (electro)magnetic, acoustic etc.) a user's orientation, i.e. a user's viewpoint may be determined. Taking this viewpoint into account, the video signal that is to be projected onto e.g. a screen, may be calculated. The user's experience may thus be rendered more realistic still by incorporating e.g. a change of image when a user's turns his head.

In preferred embodiments, the method according to the invention further comprises obtaining input on said structure to be simulated and/or obtaining input on the fire to be simulated. These features respectively allow the user to practice extinguishing a fire in a structure that he or the trainer can design (preferably resembling a structure, where the user may actually be required to use a fire extinguisher in real life) and allow the trainer to design the kind of fire the user or trainer wishes to practice (e.g. small fire, big fire, big fire with risk of explosion etc.). In some embodiments, this input (particularly input on the structure) may be obtained before starting the actual training. In other embodiments, the fire to be simulated may be modified during the training.

Also, in some embodiments, the method comprises obtaining input on external factors influencing the simulated fire in the simulated structure. These external factors may preferably be controlled by an operator (instructor). As a user trains the use of simulated fire-fighting equipment, an instructor may observe and influence the simulation, e.g. by interrupting the simulation temporarily to give instructions to the user. Another option is that the operator makes the user "immortal", such that the user may pass through a simulated fire, without consequences for the simulation. Yet another option is that an instructor changes external circumstances, such as changing the wind conditions around the simulated structure. If for example, a window of the simulated structure is open, the wind condition outside the simulated structure may influence the development of the simulated fire. An instructor may thus increase or decrease the level of difficulty of the user's training either before or during the training.

In another aspect, the present invention also relates to a computer program product comprising program instructions for causing a computer to perform a method for the development of a fire in a structure according to the invention. The invention also relates to such a computer program product embodied on a storage medium (for example, a CD-ROM, a DVD, a USB drive, on a computer memory or on a read-only memory) or carried on a carrier signal (for example, on an electrical or optical carrier signal).

In a further aspect of the invention, the present invention relates to a computer system for training the use of fire-fighting equipment, comprising: a module for generating a video signal reflecting the view of a user of a simulated fire in a simulated structure taking the state of the fire and the movement of the user through said structure into account, a module for sending a generated video signal to a device capable of reproducing said video signal on at least one screen, a module for obtaining input on the movement of a user through said structure from one or more sensors, a module for obtaining input on the use of a simulated fire repressing device from a remote control device, and a module for calculating the development of the simulated fire in the simulated structure taking the structure and the input on the use of said simulated fire repressing device into account. With the computer system according to the invention the actual ability of a user to extinguish a fire using the fire-fighting equipment may be evaluated in a realistic environment. It should be noted that these modules do not necessarily be separate modules. For example, in some embodiments of the invention, a single module both for obtaining input on the movement of a user through said structure from one or more sensors, and for obtaining input on the use of a simulated fire repressing device from a remote control device may be provided. In other embodiments, two separate modules may be separated.

In some embodiments of the invention, the computer system also comprises a module for evaluating a user's performance in use of fire-fighting equipment in a simulated fire in a simulated structure. The user's performance during various trainings may thus be evaluated, indicating a user's progress and a user's readiness to use a fire repressing device.

In yet another aspect, the present invention relates to a system for training the use of fire-fighting equipment comprising the computer system according to the invention, furthermore comprising at least one remote control device for user interaction, at least one screen and at least one projector for projecting said video a signal on said at least one screen. In some embodiments of the invention, three screens positioned in such a way that they can reflect a three-dimensional image to the user may be used. Such a three-dimensional projection makes the simulation more realistic. In other embodiments of the invention, four screens may be used: three screens for reflecting a three-dimensional image around the user and a fourth screen on which a user may stand or move. Upon said fourth screen, e.g. the floor of the simulated structure may be reflected.

Preferably, at least one remote control device is adapted such that its three-dimensional orientation may be determined and may be obtained as input by the computer system and/or adapted such that its three-dimensional position with respect to said at least one screen upon which said video signal is projected may be determined and may be obtained as input by the computer system. Said three-dimensional orientation and position may be determined in a variety of ways: optically and/or electromagnetically and/or with accelerometers and/or using ultrasound or any other known way.

In some embodiments of the invention, the remote control device adapted to be used in a system according to the invention for training in the use of fire-fighting equipment comprises an interface allowing a user (apart from controlling simulated fire-fighting equipment) to simulate one or more of the following actions: open or close doors and windows, activating or deactivating a fire alarm, and grabbing or exchanging different kinds of fire-fighting equipment.

In some embodiments of the invention, the system for training the use of fire-fighting equipment furthermore comprises one or more sensors to determine a user's orientation and/or one or more sensors to determine movement of a user's legs. In one example, the user may e.g. carry one or more accelerometers in his trousers. The accelerometers may thus measure a movement of a user such as walking, jumping, ducking etc. The information derived from this movement may thus be used in the simulation. A user will thus be able to walk through the simulated structure, run, walk down stairs, duck etc. In the same example, some system may be provided to determine the orientation of a user's head to determine the user's viewpoint. Said system may be comprised in e.g. a mask or glasses a user is wearing, but other arrangements are also possible. The retrieved information may be used to generate a video signal that reflects what a user would see in a real situation, taking a changing viewpoint into account: the view of the simulated fire changes if the user ducks or if he turns his head.

### BRIEF DESCRIPTION OF THE DRAWINGS

Particular embodiments of the present invention will be described in the following, only by way of non-limiting example, with reference to the appended drawings, in which:
Figure 1 illustrates a functional structure of a computer system for training the use of fire-fighting equipment in an embodiment of the present invention;
Figure 2 illustrates a functional structure of a simulation editor, part of a computer system for training the use of fire-fighting equipment in an embodiment of the invention;
Figure 3 illustrates a relationship between a simulation module and a simulation editor, both part of a computer system for training the use of fire-fighting equipment according to the present invention;
Figure 4 shows a schematic top view of a simulated structure, in which a fire may be simulated using a method according to the present invention;
Figure 5 shows an embodiment of a remote control which may be used in methods according to the present invention;
Figures 6 is a screenshot of a simulation editor of a computer program according to an embodiment of the present invention;
Figure 7 shows a simulated fire in a simulated structure such as may be generated in a method according to the present invention;
Figure 8 shows a photo of a user during a training in the use of fire fighting equipment using a method and a system according to the present invention;

### DETAILED DESCRIPTION OF THE INVENTION

In the following description, numerous specific details are set forth in order to provide a thorough understanding of the present invention. It will be understood, however, to one skilled in the art, that the present invention may be practiced without some or all of these specific details. In other instances, well known elements have not been described in detail in order not to unnecessarily obscure the present invention. It is also important to note that the accompanying drawings are not drawn to scale.

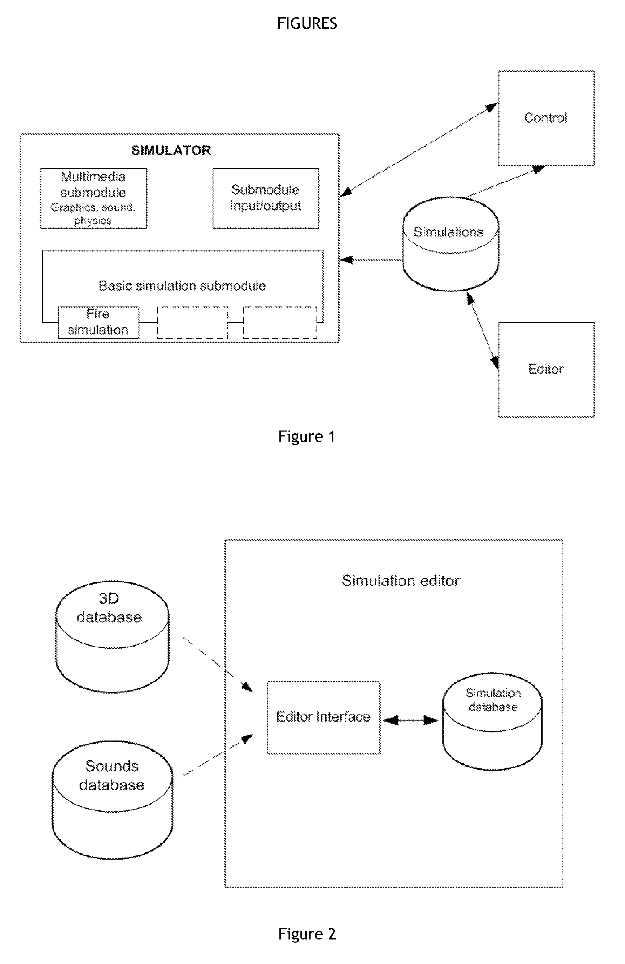

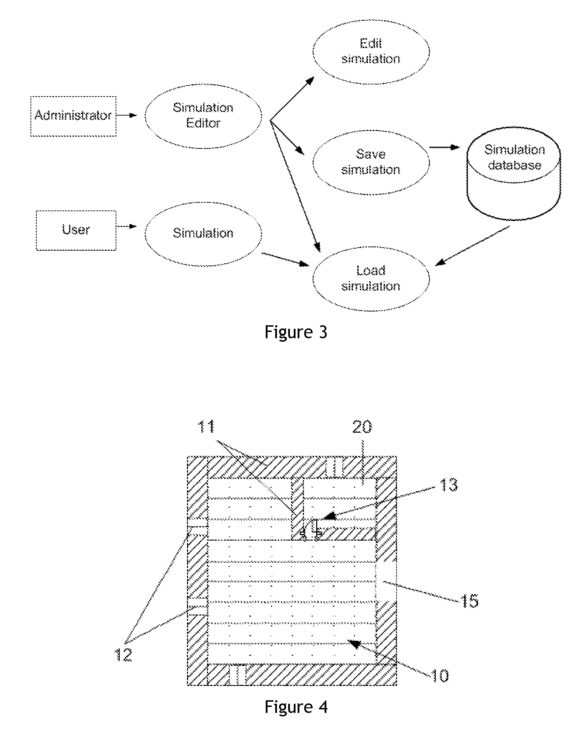

Figure 1 illustrates a functional structure of a computer system for training the use of fire-fighting equipment in an embodiment of the present invention. In this embodiment of the invention, the computer system comprises a plurality of modules. A first module is a simulator, a second module is a control module and a third module is an editor, also illustrated in figures 2 and 3. Additionally, a data repository (database) of saved simulations is available.

A description of the different modules, from a functional point of view, will now follow: with the editor, a new simulation or situation (structure, kind of fire) may be created. Said simulation may then be stored in the simulations database. The control module serves to control the simulation: the simulation may be stopped, or restarted, or the control module may modify parameters of the simulation when the simulation is running etc. An additional feature that may be included in preferred embodiments of the invention, is the ability to save the progress of a user in the use of fire-fighting equipment, so that after a simulation a user may receive objective feedback on his performance during a simulation. A third main module is the simulator itself. The simulator may receive the created scenario (kind of fire, type of structure etc.) from the simulations database. It comprises an input/output submodule which receives input on the movement of a user through said structure from at least one sensor and input on the use of a simulated fire repressing device from a remote control device. Using said input the development of the simulated fire in the simulated structure may be calculated taking the structure (different materials, air flow in structure, instantaneous temperatures) into account. Also, things such as smoke propagation through the structure corresponding to the progress of the fire may be calculated. Subsequently, an updated video signal reflecting the view of the user of said simulated fire in said simulated structure taking the calculated development of the fire and the input on the movement of the user through said structure into account may be generated. For this, a multimedia submodule is provided which at least comprises a graphics subsystem, and in preferred embodiments also an audio subsystem. From the multimedia submodule, a video signal (preferably, but not necessarily three-dimensional) may be generated that visualizes the state of the fire as seen from the location of the user in the simulated structure. Examples of possible visualizations may be: fire and smoke spreading through rooms, burning furniture, people evacuating the building etc. In preferred embodiments, an audio submodule may provide a corresponding audio signal. Examples of suitable audio signals: smouldering fire, wind blowing, people screaming etc. These audio signals may previously have been stored in a database, such that they may be extracted at suitable moments.

According to the invention, once a video signal (and audio signal) has been generated, said signal is sent to a device capable of reproducing it on at least one screen. Said device may e.g. be a projector. At least one screen (which may be formed by a t.v. screen, a projection screen or even an ordinary wall portion) may be used: a user stands in front of said screen and sees the development of the fire and his influence on said development. In some embodiments of the invention, three screens positioned in such a way that they can reproduce three-dimensional images may be provided.

The development of the simulated fire is calculated within the simulator module. In one aspect of the invention, the development of the fire is governed by a number of differential equations comprising e.g. an equation concerning the development of gases, an equation governing the development of smoke, an equation governing the development of oxygen content in the air, an equation governing the development of the fire in a simulated material etc.

These equations are calculated for every voxel (a three-dimensional pixel) of the simulated structure. With such a representation with voxels, the variables such as oxygen level, temperature, material are assumed to be the same for the space comprised by a single voxel. In a part of the structure wherein a simulated fire is present, a room may be divided in a large number of small voxels. In other parts of the structure, where at least temporarily no fire is present, the structure may be divided in much larger voxels. In this way, a balance may be reached between necessary calculation time and simulation accuracy.

At a high frequency, the new status of the fire is calculated. The frequency of calculating the new status may vary during the simulation and may depend on the processing capacity of the computing systems used and the instantaneous processing load during the simulation. The input for a calculation step is generated partly by the previous calculation step, and partly by e.g. input data on the use of the simulated fire repressing device by a user. In the user's observation the simulated fire however develops in a continuous (non-discrete) manner.

It will be clear to the person skilled in the art that the separate modules do not necessarily need to be physically connected. They may communicate through e.g. wireless communication protocols and may also be located at different locations and communicate e.g. via Internet. Additionally, it should be borne in mind that even though, in the embodiment shown in figure 1, some embodiments are shown separately, they may also be combined into a single module. For example, the video and audio submodules may be combined into a single module. In other embodiments, a module shown as a single unit in figure 1 may be composed of several separate modules: e.g. the editor module may be composed of various submodules or the control module may comprise a separate module for evaluation of a user's performance and a separate module for controlling the simulation process. Within the scope of the invention, a wide variety of lay-outs may be chosen for the system.

Figure 2 illustrates a functional structure of a simulation editor and figure 3 illustrates a relationship between a simulation module and a simulation editor, both part of a computer system for training the use of fire-fighting equipment according to the present invention. The editor module comprises a user interface which allows a user (or usually an administrator) to edit a simulation. Said simulation may be stored in a database. A user, at the moment of simulation may select from said database a preconfigured simulation (illustrated in figure 3).

Part of the simulation editor comprises an editor for configuring a structure within which a fire may be simulated. An administrator (or user) may select from a database, a number of elements to form the structure. Said elements may comprise e.g. walls, windows, doors, stairs, cupboards, chairs and others. Each element may comprise information on the kind of material used, e.g. paper, wood, inflammable liquids, explosive materials, metals, plastic etc.

A very schematic example of a simulated structure is shown in figure 4. In this figure, a grid of 50 cm x 50 cm elements was available. An administrator may assign an element (e.g. stone wall, wooden table etc.) to each of these blocks. In figure 4 a first room 10 surrounded by walls 11 can be seen. A second room 20 is surrounded by walls, and comprises a door 13. Furthermore, emergency exits 15 are provided and within the walls, a number of windows 12 are provided.

The material, volume, mass etc. of all these elements is important for the simulation. A fire will e.g. spread quicker in a wooden structure than in a stone structure. The characteristics of each of the elements that may be useful for a simulation may be stored in a database. Sounds that may be related to said elements may also be stored in a data repository. When a whole structure has been designed, said structure may be stored in the simulation database.

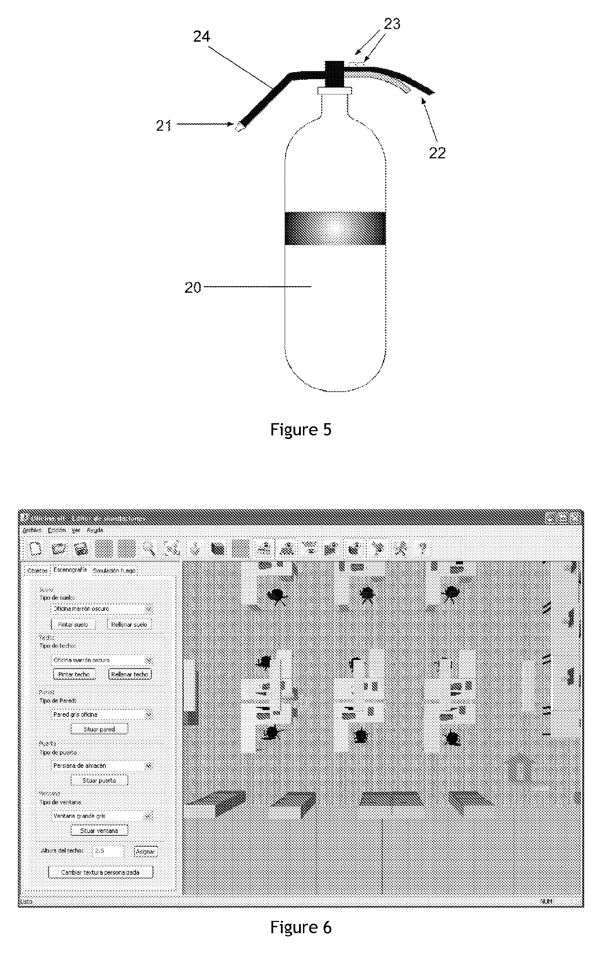

An embodiment of a remote control for a user is depicted in figure 5. In preferred embodiments of the invention, the remote control 20 is formed by a modified fire extinguishing device. The remote control 20 in this embodiment comprises a spout (or outlet) 21 on the end of tube 24, and a lever (or actuator) 22. If a user actuates on the lever, a signal is sent and received by the input/output module of the simulator. Said input may thus be used in the fire simulation.

A control subunit 23 (with additional buttons/actuators) is provided on remote control 20. Said subunit may serve to give commands e.g. to open/close doors or windows in the simulated structure, exchange a fire extinguishing device encountered in the simulated structure etc. Any kind of command may be assigned to the remote control 20. Preferably spout 21 is provided with devices allowing the determination of the position and orientation of the device. Knowing the exact position and orientation of the spout 21 with respect to the simulated fire allows the simulation to be more realistic (e.g. a fire extinguishes if the spout is aimed at the correct location, not by merely activating it). To this end, spout 21 may be provided e.g. with infrared sensors. If the screen(s) upon which the simulation is projected is provided with infrared light emitters (e.g. LEDs), the detection of the infrared light (and its intensity) may be used to e.g. determine the correct location and orientation of the spout with respect to the screen. In this example, the exact location of the LED's on the screen(s), e.g. top or bottom of the screen, must be exactly known. Other options for the correct determination of location and orientation of the remote control are available: (electro)magnetic or ultrasound emitters and receivers on remote control and/or screen, accelerometers on the remote control device etc. Any suitable sensor system may be used within the scope of the present invention.

The movement of a user may be determined e.g. by accelerometers the user carries in pockets of his trouser. The accelerometers can recognize when a person is walking, jumping, ducking, running etc. Said information may be used to simulate the user's movement through the simulated structure. In some embodiments, the system further comprises a sensor system for determining a user's head's orientation, such as to be able to determine the viewpoint of the user. To this end, a user may carry some kind of sensors in a band on his head, in glasses or in a mask the user is wearing (such a mask may even render the simulation more realistic). A suitable sensor system may be an optical sensor system as previously described, but other kinds of systems may also be used. When a user's viewpoint is known, this may be taken into account when generating the video signal.

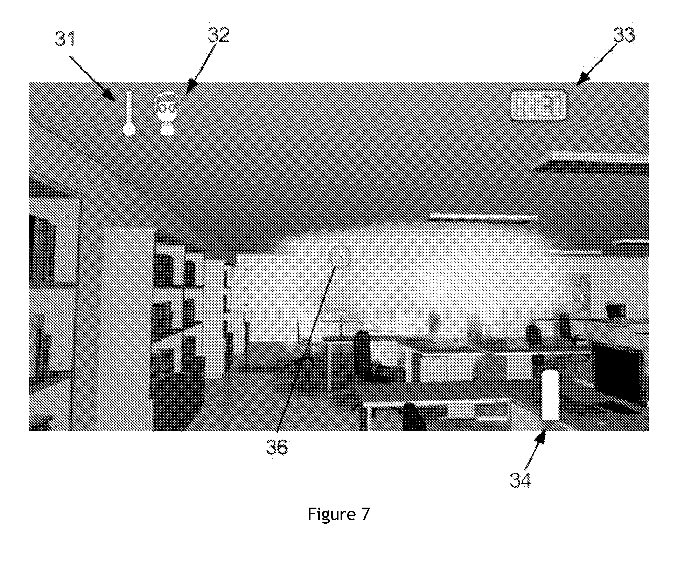

Figures 6 is a screenshot of a simulation editor of a computer program according to an embodiment of the present invention. An office environment with a plurality of desks is simulated. In this simulation, a fire starts at one of the desks. The editor allows an administrator or user to modify the environment by selecting different structures, materials, material properties etc. Figure 7 shows a simulated fire in a simulated structure such as may be generated in a method according to the present invention. The simulated structure corresponds to the environment created with the editor shown in figure 6. The screen shows the office environment with the fire and smoke propagation. In this embodiment of the invention, the screen also indicates to the user the time that has elapsed since the beginning of the simulation, the current temperature in the room, the status of the fire extinguishing device and the mask the user is wearing. The invention of course is in no way limited to the presentation of these features. Some may be deleted, whereas others may be added without departing from the scope of the invention.

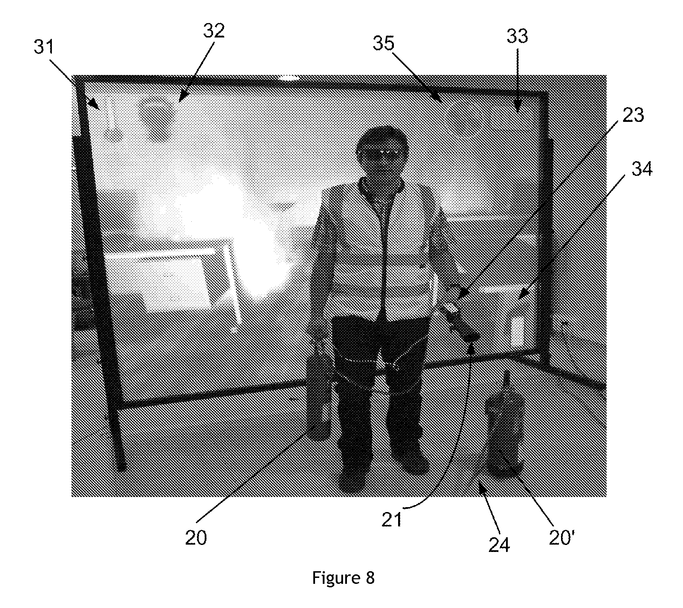

In figure 7, a number of other interesting optional features of the present invention can be seen. On the top of the screen, several icons are shown. Thermometer icon 31 indicates the temperature in the room of the simulated structure, whereas gas mask icon 32 may be used to indicate the mount of oxygen in the simulated structure during the simulated fire. Clock icon 33 is used to indicate the tine that has passed since the beginning of the training. Fire extinguisher icon 34 is used in this embodiment to indicate the remaining contents in the simulated fire repressing device. Ventilator icon 35 (only shown in figure 8) is used to indicate whether the air conditioning system (ventilation system) is turned on or off in the simulated structure. Finally, pointer 36 indicates to the user where he is instantaneously pointing the fire repressing device.

Figure 8 shows a photo of a user during a training (which was temporarily interrupted) in the use of fire fighting equipment using a method and a system according to the present invention. Gas mask icon 32 is of different shape and colour than the corresponding icon shown in figure 7. In the screenshot of figure 8, icon 32 indicates that the level of oxygen is low (and the level of toxic gases in the compartment of the simulated structure is high), such that a gas mask would be needed in a real-life situation. Ventilator icon 35 indicates that the e.g. the ventilation system is running in the simulated structure. The ventilation may have an important effect on the development of the simulated fire.

Further illustrated in figure 8 is the use of different fire repressing devices within a single simulation. Two different remote control devices 20 and 20' are shown. Fire repressing device 20 comprises a spout 21 on the end of tube 24. Control subunit 23 may be mounted upon 21 through an easy click-connection. When the user wants to switch fire repressing device since he judges that this is more appropriate for the stage of the simulated fire, the control subunit 23 may be disconnected from remote control 20 and quickly connected (through a suitable click-connection) to remote control 20'. All functionalities comprised in control subunit 23 (e.g. ducking, jumping, sounding fire alarm, opening/closing doors etc.) are thereby transferred to remote control device 20'. In some embodiments of the invention, a functionality such as activating/deactivating the fire repressing device may be comprised in control subunit. In other embodiments, this functionality may be comprised in the main body of remote control 20. Also sensors allowing the determination and/or orientation of the remote control device may be associated with the control subunit 23 or may instead be associated with other parts of the remote control device 20.

Although this invention has been disclosed in the context of certain preferred embodiments and examples, it will be understood by those skilled in the art that the present invention extends beyond the specifically disclosed embodiments to other alternative embodiments and/or uses of the invention and obvious modifications and equivalents thereof. Thus, it is intended that the scope of the present invention herein disclosed should not be limited by the particular disclosed embodiments described before, but should be determined only by a fair reading of the claims that follow.

## Claims

1. A method for training the use of fire-fighting equipment, comprising:
obtaining input on the movement of a user through a simulated structure from at least one sensor;
obtaining input on the use of a simulated fire repressing device from a remote control device;
calculating the development of a simulated fire in the simulated structure taking the structure and the input on the use of said simulated fire repressing device into account;
generating a video signal reflecting an instantaneous view of a user of a simulated fire in a simulated structure taking the calculated development of the fire and the input on the movement of the user through said structure into account; and
sending said generated video signal to a device capable of reproducing said video signal on at least one screen.

2. A method according to claim 1, wherein generating a video signal reflecting an instantaneous view of a user of a simulated fire in a simulated structure taking the calculated development of the fire and the input on the movement of the user through said structure into account also comprises generating an audio signal of the simulated fire in the simulated structure and
sending said generated video signal to a device capable of reproducing said video signal on at least one screen also comprises sending said audio signal to a device capable of reproducing said audio signal.

3. A method according to claim 2, wherein generating an audio signal of the simulated fire in the simulated structure comprises retrieving an audio signal from a data repository comprising a plurality of predetermined audio signals.

4. A method according to any preceding claim, wherein obtaining input on the use of a simulated fire repressing device from a remote control device comprises obtaining input concerning the location and/or orientation of said remote control unit with respect to said at least one screen.

5. A method according to any preceding claim, wherein obtaining input on the use of a simulated fire repressing device from a remote control device comprises obtaining input concerning the type of simulated fire repressing device used.

6. A method according to any preceding claim, wherein obtaining input on the movement of a user through a simulated structure from at least one sensor also comprises obtaining input on a user's orientation with respect to said simulated structure from one or more sensors and
wherein when generating a video signal reflecting an instantaneous view of a user of a simulated fire in a simulated structure taking the calculated development of the fire and the input on the movement of the user through said structure into account, also said user's orientation is taken into account.

7. A method according to any preceding claim, wherein generating a video signal comprises generating a three-dimensional video signal.

8. A method according to any preceding claim, further comprising obtaining input on said structure to be simulated.

9. A method according to any preceding claim, further comprising obtaining input on the fire to be simulated.

10. A method according to any preceding claim, further comprising obtaining input on external factors influencing the simulated fire in the simulated structure.

11. A computer program product comprising program instructions for causing a computer to perform a method for the development of a fire in a structure according to any of claims 1 to 10.

12. A computer program product according to claim 11, embodied on a storage medium.

13. A computer program product according to claim 11, carried on a carrier signal.

14. A computer system for training the use of fire-fighting equipment, comprising:
a module for obtaining input on the movement of a user through a simulated structure from at least one sensor;
a module for obtaining input on the use of a simulated fire repressing device from a remote control device;
a module for calculating the development of a simulated fire in the simulated structure taking the structure and the input on the use of said simulated fire repressing device into account;
a module for generating a video signal reflecting an instantaneous view of a user of a simulated fire in a simulated structure taking the calculated development of the fire and the input on the movement of the user through said structure into account; and
a module for sending said generated video signal to a device capable of reproducing said video signal on at least one screen.

15. A computer system for training the use of fire-fighting equipment according to claim 14, further comprising a module for generating an audio signal of the simulated fire in the simulated structure and a module for sending said audio signal to a device capable of reproducing said audio signal.

16. A computer system for training the use of fire-fighting equipment according to claim 14 or 15, further comprising a module for obtaining input on said structure to simulate and/or a module for obtaining input on the fire to be simulated.

17. A computer system for training the use of fire-fighting equipment according to any of claims 14-16, further comprising a module for evaluating a user's performance in use of fire-fighting equipment in a simulated fire in a simulated structure.

18. A system for training the use of fire-fighting equipment comprising the computer system according to any of claims 14-17, furthermore comprising at least one sensor adapted to measure a movement of a user, at least one remote control device for registering the use of a simulated fire repressing device by a user, at least one screen and at least one projector for projecting said video signal on said at least one screen.

19. A system for training the use of fire-fighting equipment according to claim 18, further **characterised in that** said at least one remote control device is adapted such that its three-dimensional orientation may be determined and may be obtained as input by the computer system and/or adapted such that its three-dimensional position with respect to said at least one screen upon which said video signal is projected may be determined and may be obtained as input by the computer system.

20. A system for training the use of fire-fighting equipment according to claim 18 or 19, further **characterised in that** said one or more sensors adapted to measure a movement of a user comprise sensors for detecting the movement of a user's legs, for simulating the movement of a user through the simulated structure.

21. A system for training the use of fire-fighting equipment according to any of claims 18-20, furthermore comprising at least one sensor adapted to determine a user's orientation.

22. A system for training the use of fire-fighting equipment according to any of claims 18-21, said at least one remote control device comprising an interface allowing a user to simulate one or more of the following actions: open or close doors and windows, activating or deactivating a fire alarm, and grabbing or exchanging different kinds of fire-fighting equipment.
